Europäisches Patentamt

European Patent Office

Office européen des brevets

(19)

(11) Veröffentlichungsnummer: **0 254 708**
**A2**

## (12) EUROPÄISCHE PATENTANMELDUNG

(21) Anmeldenummer: 87890109.9

(22) Anmeldetag: 20.05.87

(51) Int. Cl.⁴: **D 06 F 37/30**

(30) Priorität: 27.05.86 AT 1422/86

(43) Veröffentlichungstag der Anmeldung:
27.01.88 Patentblatt 88/04

(84) Benannte Vertragsstaaten:
BE CH DE ES FR GB IT LI NL SE

(71) Anmelder: AUSTRIA Antriebstechnik G. Bauknecht
Aktiengesellschaft
G.-Bauknecht-Strasse 1
A-8740 Zeltweg-Spielberg (Steiermark) (AT)

(72) Erfinder: Beckord Ulrich Dipl.Ing.
Westende 5
A-8720 Pausendorf (Steiermark) (AT)

Mazuheli Robert Ing.
Neugasse 5
A-8734 Grosslobming (Steiermark) (AT)

(74) Vertreter: Beer, Manfred, Dipl.-Ing. et al
Patentanwälte Dipl.-Ing. Otto Beer, Dipl.-Ing. Manfred
Beer Lindengasse 8, Postfach 462
A-1071 Wien (AT)

Die Bezeichnung der Erfindung wurde geändert (Richtlinien für die Prüfung im EPA, A-III, 7.3).

(54) **Haushaltsmaschine mit einer elektrischen Bremseinrichtung.**

(57) Zur Abbremsung des als Antrieb einer Haushaltsmaschine dienenden, frequenzumrichtergesteuerten Drehstrom-Asynchronmotors nach dem Abschalten der Stromversorgung werden zwei in verschiedenen Brückenzweigen der Drehstrombrücke des Frequenzumrichters angeordnete Leistungstransistoren über eine Bremselektronik aufgesteuert, womit Gleichstrom in den Motor gezwungen und ein Bremsmoment erzeugt wird.

EP 0 254 708 A2

Bundesdruckerei Berlin

# Beschreibung

## Haushaltsmaschine

Die Erfindung betrifft eine Haushaltsmaschine, insbesondere Waschmaschine, mit einem frequenzumrichtergesteuerten Drehstrom-Asynchronmotor als Antrieb, sowie mit einer elektrischen Bremseinrichtung zur Beschleunigung des Stillsetzens des Motors nach dem Abschalten der Stromversorgung, welche eine mit zumindest zwei in verschiedenen Brückenzweigen angeordneten Leistungstransistoren der Drehstrombrücke des Frequenzumrichters verbundene Bremselektronik aufweist.

Im Zuge der Bestrebungen, bei modernen Waschmaschinen immer höhere Drehzahlen für den Schleuderbetrieb der Maschine bereitzustellen, ergibt sich in steigendem Ausmaß das Problem, daß nach dem Abschalten der Stromversorgung des Antriebsmotors besonders bei einer vollgefüllten Wäschetrommel relativ lange Zeit für den Auslauf der Maschine bis zum völligen Stillstand der Trommel verstreicht. Diese Zeit, die naturgemäß für weitere Programmschritte bzw. für die Entladung der Maschine nicht zur Verfügung steht, kann ohne weiteres im Bereich von ein bis zwei Minuten liegen bei Schleuderdrehzahlen von 1200 pro Minute und darüber.

Ausgehend von dieser Problematik liegt der vorliegenden Erfindung die Aufgabe zugrunde, eine Möglichkeit zur Abkürzung der nach dem Abschalten der Stromversorgung des Antriebsmotors bis zum Stillstand der Maschine verstreichenden Zeit mit einfachen und kostengünstigen Mitteln zu ermöglichen. Der an sich in diesem Zusammenhang naheliegende Gebrauch einer auf den Antriebsmotor bzw. z.B. auch auf die Wäschetrommel oder ein anderes Teil des Antriebssystems einwirkenden mechanischen Bremseinrichtung verbietet sich bei den in Rede stehenden Haushaltsmaschinen zu Folge der damit einhergehenden erhöhten Kosten und ist darüber hinaus auch im Hinblick auf die Umweltbelastung durch den Abrieb von Bremsbelägen problematisch.

Eine als Drehschrauber ausgeführte Maschine der eingangs genannten Art, bei der bereits eine elektrische Bremseinrichtung vorgesehen ist, ist beispielsweise aus der DE-A-31 51 625 bekannt, wobei dort explizit darauf hingewiesen wird, daß die Bremsung über ein spezielles Bremsprogramm erfolgt, bei dem in einem Zähler die Phasenfolge mitverfolgt und bei Bremsbefehl das jeweils zur gerade stromführenden Phase passende Bremsprogramm aus einem Speicher abgerufen wird. Der Bremsvorgang selbst wird dabei durch Verringern der Speisefrequenz und übersynchrones Bremsen erreicht. Übersynchrones Bremsen kann jedoch zu einem kritischen Ansteigen im Gleichspannungszwischenkreis und damit letzlich zur Beschädigung der Leistungshalbleiter führen. Diese Nachteile lassen sich nur durch zusätzliche Bauelemente vermeiden.

Es ist davon auszugehend eine weitere Aufgabe der Erfindung, die genannten Nachteile ohne zusätzlichen Bauteilaufwand und auf einfache Weise zu vermeiden.

Gemäß der vorliegenden Erfindung werden die genannten Aufgaben dadurch gelöst, daß die Bremselektronik im Bremsbetrieb die verbundenen Transistoren aufsteuert und damit zum Einleiten von Gleichstrom in den Motor dient.

Damit wird also bei der Erfindung in einfacher Weise mit über eine Aufsteuerung der mit der Bremselektronik verbundenen Transistoren erzeugtem Gleichstrom gebremst, womit die erwähnten Nachteile ohne zusätzliche Bauteile vermieden sind.

Die für die Steuerung des Drehstrom-Asynchronmotors im Frequenzumrichter vorhandene Drehstrombrücke wird nach dem Abschalten der Stromversorgung - also dem Sperren aller sechs Leistungstransistoren - in einen bestimmten, definierten Zustand versetzt. Die Drehstrombrücke wird nun nicht mehr kontinuierlich umgesteuert, um das für den Betrieb des Motors notwendige Drehfeld zu erzeugen, sondern es wird über die Bremselektronik das Drehfeld de fakto an einer bestimmten Stelle angehalten, was einer "Freuquenz 0" entspricht, womit Gleichstrom in den Drehstrom-Asynchronmotor gezwungen und ein Bremsmoment erzeugt wird. Auf diese Weise kann nach dem Abschalten der Stromversorgung sehr rasch und einfach ein Stillstand des Antriebsmotors und damit beispielsweise der Wäschetrommel einer Waschmaschine erreicht werden.

Der über die Bremselektronik erzeugbare Gleichstrom kann in weiterer Ausgestaltung der Erfindung für die Bremsung des Motors durch Chopper-Betrieb der angesteuerten Leistungstransistoren einstellbar sein, was eine einfache Regelung der Bremswirkung erlaubt.

Die Erfindung vermeidet auch die negativen Auswirkungen der an sich ebenfalls gegebenen Möglichkeit der generatorischen Bremsung, die aber im Zusammenhang mit dem Frequenzumrichter gravierend auftreten. Der Antriebsmotor würde nämlich im generatorischen Betrieb Energie in den Gleichstromzwischenkreis des Frequenzumrichters einspeisen, dessen Spannung dann ansteigen würde, womit letzten Endes die Sperrspannung der Leistungstransistoren überschritten würde. Um dies zu vermeiden, müßte man weitere Leistungsbauelemente vorsehen, die den Aufwand und damit die Kosten weiter in die Höhe treiben würden. Ähnliche Folgen hätte auch eine Gegenstrombremsung.

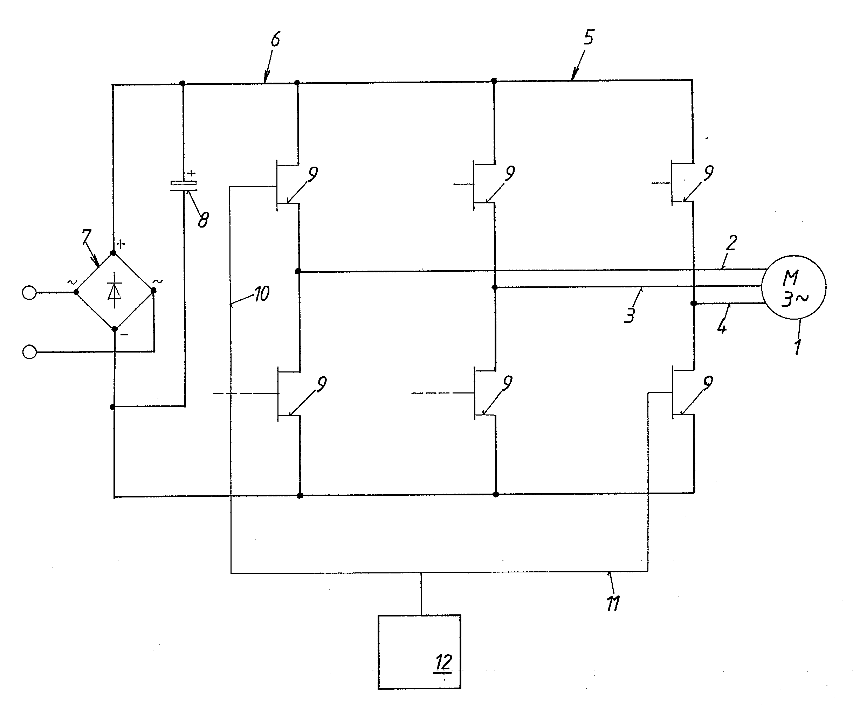

Die Erfindung wird im folgenden anhand des in der Zeichnung in einem schematischen Schaltbild dargestellten Ausführungsbeispiel näher erläutert.

Ein Drehstrom-Asynchronmotor 1, der zum Antrieb einer nicht weiter dargestellten Haushaltsmaschine - wie etwa einer Waschmaschine dient, ist über Versorgungsleitungen 2, 3, 4 mit der Drehstrombrücke 5 eines Frequenzumrichters 6 verbunden. Der Frequenzumrichter 6 weist einen Gleichspannungszwischenkreis auf und ist eingangsseitig über einen Gleichrichter 7 mit gleichgerichteter Spannung aus dem Wechselstromnetz versorgt. Parallel zu den Gleichspannungsanschlüssen des Gleichrichters 7 ist noch ein Siebkondensator 8 angeordnet.

Die sechs Leistungstransistoren 9 der Drehstrombrücke 5 sind auf hier nicht weiter dargestellte Weise von einer Steuerelektronik aus kontinuierlich umsteuerbar, womit auf bekannte und hier nicht weiter interessierende Weise das für den Betrieb des Motors I erforderliche Drehfeld aus der Gleichspannung des Zwischenkreises erzeugt wird.

Über Leitungen I0, II sind zwei in verschiedenen Brückenzweigen angeordnete Leistungstransistoren 9 - hier der linke obere und der rechte untere - unabhängig von ihrer für die Erzeugung des Drehfeldes erforderlichen Verbindung mit der Steuerelektronik mit einer Bremselektronik I2 verbunden, die im Normalbetrieb des Motors I keine Funktion hat und erst beim bzw. nach dem Abschalten der Stromversorgung in Funktion tritt. Dann - wenn nämlich sonst alle sechs Leistungstransistoren geschlossen wären - werden über die Bremselektronik I2 die beiden von ihr angesteuerten offengehalten, so daß praktisch das Drehfeld an einer bestimmten Stelle angehalten und Gleichstrom über die Versorgungsleitungen 2 und 4 in den Motor I gezwungen wird. Damit wird ein Bremsmoment erzeugt, das über einen Chopper-Betrieb der beiden angesteuerten Leistungstransistoren 9 auch steuerbar ist.

Die Bremselektronik I2 könnte natürlich auch in einer gleichzeitig auch zur Steuerung des Drehfeldes im Normalbetrieb des Motors I dienenden elektronischen Baugruppe oder dergleichen realisiert sein, die für den Bremsbetrieb dann eben nur eine andere Funktion ausführt.

**Patentansprüche**

1. Haushaltsmaschine, insbesondere Waschmaschine, mit einem frequenzumrichtergesteuerten Drehstrom-Asynchronmotor als Antrieb, sowie mit einer elektrischen Bremseinrichtung zur Beschleunigung des Stillsetzens des Motors (I) nach dem Abschalten der Stromversorgung, welche eine mit zumindest zwei in verschiedenen Brückenzweigen angeordneten Leistungstransistoren (9) der Drehstrombrücke des Frequenzumrichters verbundene Bremselektronik (I2) aufweist, dadurch gekennzeichnet, daß die Bremselektronik (I2) im Bremsbetrieb die verbundenen Transistoren (9) aufsteuert und damit zum Einleiten von Gleichstrom in den Motor (I) dient.

2. Maschine nach Anspruch I, dadurch gekennzeichnet, daß der über die Bremselektronik (I2) erzeugte Gleichstrom für die Bremsung des Motors (I) durch Chopper-Betrieb der angesteuerten Leistungstransistoren (9) einstellbar ist.